# EUROPEAN PATENT SPECIFICATION

(11) **EP 2 832 529 B1**
(45) Date of publication and mention of the grant of the patent: **15.02.2023**
(21) Application number: 13767769.6
(22) Date of filing: 27.03.2013
(51) Int. Cl.: B29C 67/20, C08J 7/00, C08J 9/00, B01D 39/16, B29C 59/16, C08J 7/12, H01M 4/02, H01M 4/04, H01M 4/86, H01M 4/88, B29L 7/00, B29K 267/00, B29D 7/01, B29C 35/08

(54) **METHOD FOR PRODUCING POROUS POLYMER FILM AND POROUS POLYMER FILM**
VERFAHREN ZUR HERSTELLUNG EINES PORÖSEN POLYMERFILMS UND PORÖSER POLYMERFILM
PROCÉDÉ DE PRODUCTION D'UN FILM POLYMÈRE POREUX ET FILM POLYMÈRE POREUX

(30) Priority: 30.03.2012 JP 2012081758
(43) Date of publication of application: 04.02.2015
(73) Proprietor: Nitto Denko Corporation, Osaka 567-8680 (JP)
(72) Inventor: FURUYAMA, Satoru, Ibaraki-shi Osaka 567-8680 (JP); MORIYAMA, Junichi, Ibaraki-shi Osaka 567-8680 (JP); NAGAI, Yozo, Ibaraki-shi Osaka 567-8680 (JP); YURI, Yosuke, Takasaki-shi Gunma 370-1292 (JP); ISHIBORI, Ikuo, Takasaki-shi Gunma 370-1292 (JP); YUYAMA, Takahiro, Takasaki-shi Gunma 370-1292 (JP); ISHIZAKA, Tomohisa, Takasaki-shi Gunma 370-1292 (JP); OKUMURA, Susumu, Takasaki-shi Gunma 370-1292 (JP); MAEKAWA, Yasunari, Takasaki-shi Gunma 370-1292 (JP); KOSHIKAWA, Hiroshi, Takasaki-shi Gunma 370-1292 (JP); YAMAKI, Tetsuya, Takasaki-shi Gunma 370-1292 (JP); ASANO, Masaharu, Takasaki-shi Gunma 370-1292 (JP)
(74) Representative: Cabinet Beau de Loménie
(86) International application number: PCT/JP2013/002099
(87) International publication number: WO 2013/145742

(56) References cited:
- JP-A- H0 551 479
- JP-A- 2004 058 415
- JP-A- 2005 305 444
- JP-A- 2011 184 626
- US-A- 3 612 871
- US-A- 4 956 219

## Description

### TECHNICAL FIELD

The present invention relates to a method for producing a porous polymer film using ion beam irradiation.

### BACKGROUND ART

Methods for producing porous polymer films by ion beam irradiation and subsequent chemical etching are known (see, for example, Patent Literatures 1 to 3). When a polymer film is irradiated with an ion beam, damage of the polymer chains in the polymer film occurs due to collision with the ions in regions of the polymer film through which the ions have passed. The damaged polymer chains are more susceptible to chemical etching than other regions of the film. Therefore, by chemically etching the ion-beam-irradiated polymer film, pores corresponding to the tracks of the colliding ions are formed in the polymer film, and thus a porous polymer film having the pores is obtained.

US 4 956 219 A discloses a method of producing perforations in a solid material in sheet form, an irradiation device for working the method and the resulting perforated material.

US 3 612 871 discloses a light conversion device comprising: - a light converter, wherein the light converter is adapted to convert primary light to converted light, wherein a peak emission wavelength of the converted light is in a longer wavelength range than a peak emission wavelength of the primary light, - a reflective structure coupled to at least a part of a coupling surface of the light converter, wherein the reflective structure is a narrowband reflector in the sense that is arranged to reflect at least 55% of the primary light impinging on the reflective structure and to transmit at least 50% of the converted light impinging on the reflective structure, and further describes a laser-based light source comprising such a light conversion device.

### CITATION LIST

### Patent Literature

Patent Literature 1: JP 52(1977)-003987 B
Patent Literature 2: JP 54(1979)-011971 A
Patent Literature 3: JP 59(1984)-117546 A
Patent Literature 4: US 4 956 219 A
Patent Literature 5: US 3 612 871 A

### SUMMARY OF INVENTION

### Technical Problem

In the methods disclosed in Patent Literatures 1 to 3, due consideration is not given to industrial production of porous polymer films. It is an object of the present invention to provide a method for producing a porous polymer film that is suitable for industrial production.

### Solution to Problem

The subject-matter of the present invention is defined by the claims. Advantageous Effects of Invention

The production method of the present invention is suitable for industrial production of porous polymer films.

### BRIEF DESCRIPTION OF DRAWINGS

FIG. 1 is a schematic diagram for explaining the step (I) in the production method of the present invention.
FIG. 2 is a schematic diagram for explaining the step (II) in the production method of the present invention.
FIG. 3 is a schematic diagram showing an embodiment of the step (I) in the production method of the present invention.
FIG. 4 is a schematic diagram showing another embodiment of the step (I) in the production method of the present invention.
FIG. 5 is a schematic diagram showing still another embodiment of the step (I) in the production method of the present invention.
FIG. 6Ais a schematic diagram for explaining a cross section of an example of a beam (an original beam) of ions accelerated in a cyclotron, when the cross section is taken perpendicular to the direction of the beam.
FIG. 6B is a schematic diagram showing an intensity distribution (intensity distribution of the ion beam) in the x-axis direction in the cross section shown in FIG. 6A.
FIG. 7Ais a diagram for explaining an example of a nonlinear magnetic field to be applied to the original beam to fold the tail of the original beam by nonlinear focusing.
FIG. 7B is a schematic diagram showing an example of the folding of the tail of the original beam by nonlinear focusing.
FIG. 8 is a schematic diagram showing a cross section of an example of the ion beam after the folding of the tail.
FIG. 9 is a diagram showing a scanning electron microscope (SEM) observation image of the surface of a porous polymer film prepared in Example 1.
FIG. 10 is a diagram showing a SEM observation image of the surface of a porous polymer film prepared in Example 1.
FIG. 11 is a diagram showing a SEM observation image of the surface of a porous polymer film prepared in Example 1.
FIG. 12 is a diagram showing a SEM observation image of the surface of a porous polymer film prepared in Example 1.
FIG. 13 is a diagram showing a SEM observation image of the surface of a porous polymer film prepared in Example 2.

### DESCRIPTION OF EMBODIMENTS

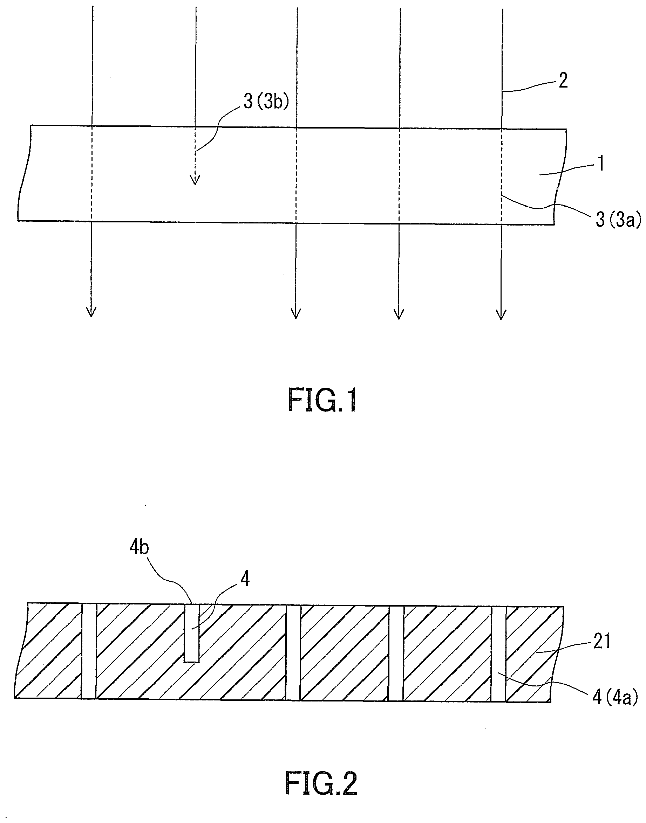

In the production method of the present invention, a polymer film is irradiated with an ion beam composed of accelerated ions so as to form a polymer film that has collided with the ions in the beam (Step (I)). When a polymer film 1 is irradiated with an ion beam, ions 2 in the beam collide with the polymer film 1 and the colliding ions 2 leave tracks 3 in the film 1, as shown in FIG. 1. When the ions 2 pass through the polymer film 1, the tracks 3 passing through the film 1 (tracks 3a) are formed, whereas when the ions 2 do not pass through the polymer film 1, the tracks 3 terminated in the film 1 (tracks 3b) are formed. Whether the ions 2 pass through the polymer film 1 or not depends on the type of the ions 2 (ionic species), the energy of the ions 2, the thickness of the polymer film 1, the type of the polymer (polymeric species) constituting the polymer film 1, etc.

In the production method of the present invention, after the step (I), the polymer film 1 that has collided with the ions 2 is chemically etched so as to form pores corresponding to the tracks 3 of the colliding ions 2 left in the polymer film 1 and obtain a porous polymer film (Step (II)). In the tracks 3 of the ions 2 in the polymer film 1, the polymer chains constituting the film 1 are damaged by the collision with the ions. The damaged polymer chains are more likely to be degraded and removed by chemical etching than polymer chains that have not collided with the ions 2. Therefore, the regions of the tracks 3 in the polymer film 1 are selectively removed by chemical etching, and a porous polymer film 21 having pores 4 corresponding to the tracks 3 formed therein, as shown in FIG. 2, is obtained. The pores corresponding to the tracks 3a passing through the polymer film 1 form through holes 4a. The pores 4 corresponding to the tracks 3b terminated in the polymer film 1 form recesses having openings 4b on one surface (ion-irradiated surface) of the porous polymer film 21. In the porous polymer film 21, the openings 4b and/or the through holes 4a corresponding to the tracks 3 are formed. In this description, the "porous" refers to the presence of a plurality of openings and/or through holes thus formed. The regions of the porous polymer film 21 other than the openings 4b and the through holes 4a are essentially the same as the original polymer film 1 used in the step (I) unless an additional step of changing the state of the film is performed. These regions can be non-porous, for example.

On the size scale of the polymer film 1 as an object to be irradiated, the ions 2 colliding with the polymer film 1 usually travel almost linearly, and leave linear tracks 3 in the film 1. Therefore, the recesses having the openings 4b and the through holes 4a usually have a linearly extending shape. In this case, however, the center line of each of the recesses and the through holes 4a extends linearly, but the shape of the inner wall thereof varies with the type of the ions 2 applied to the polymer film 1 and the type of the polymer constituting the polymer film 1. This is because the interaction between the ions and the polymer varies with their species. For example, the through holes or the recesses formed in the polymer film 1 may have a straight tubular shape with an almost constant diameter in their extending direction (the thickness direction of the polymer film 1), or a so-called hourglass shape with a diameter once decreasing and increasing again in their extending direction.

### [Step (I)]

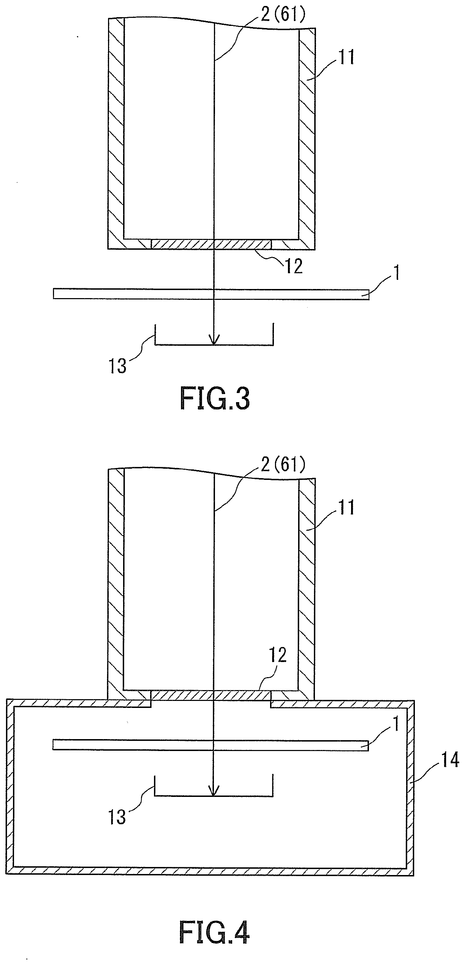

The step (I) is performed on the polymer film placed in an atmosphere with a pressure of 100 Pa or more. In this step (I), as shown in FIG. 3, the polymer film 1 placed in this atmosphere is irradiated with the ions 2 from an ion source (ion beam 61) that have (has) passed through the path of the ion beam (beam line) 11 maintained at a lower pressure than the pressure of the atmosphere in which the polymer film 1 is placed and through a pressure barrier sheet 12 disposed at the end of the beam line 11. Thus, the ions 2 collide with the polymer film 1. The pressure barrier sheet 12 is a sheet that separates the beam line 11 from the atmosphere mentioned above and maintains a pressure difference therebetween. The pressure barrier sheet 12 is permeable to the ions 2 enough to form the pores 4 by chemical etching in the step (II). The reference numeral 13 indicated in FIG. 3 and the following figures refers to a stopper 13 for catching the ions 2 that have passed through the polymer film 1. The stopper 13 is formed of, for example, a metal plate for electrical current measurement. A typical example of the stopper 13 is a Faraday cup.

Thereby, the production method of the present invention is suitable for industrial production of porous polymer films. Conventionally, a polymer film is placed in a chamber whose atmosphere is maintained at a vacuum as high as that in a beam line in order to minimize attenuation of the energy of ions before they collide with the polymer film. However, since this method requires the step of opening the hermetically sealed chamber to replace the polymer film and then evacuating the chamber to a high vacuum again on each replacement, it takes a very long time to replace the polymer film. Since the internal volume of the chamber increases as the size of the polymer film increases, the time required for the replacement also increases with the increase in the size. In the case where a polymer film having the industrially produced size is used, it may take 6 hours or more to replace the polymer film. In the industrial production of porous polymer films, a roll of a strip-shaped polymer film is often used. In this case, since outgassing from the roll occurs, it may take a very long time to achieve a high vacuum or it may be difficult to maintain the high vacuum stably. In the production method of the present invention, the pressure in the beam line 11 is maintained at a relatively low level to minimize attenuation of the energy of ions before they collide with the polymer film, and the pressure of the atmosphere in which the polymer film is placed is maintained at 100 Pa or more to reduce the time required for the replacement of the polymer film. The atmosphere with a pressure of 100 Pa or more can be stably maintained when a roll of a polymer film is used. Therefore, the production method of the present invention is suitable for industrial production of porous polymer films.

The type of the ions 2 to be applied to the polymer film 1 and caused to collide with the polymer film 1 is not limited. The ions 2 are preferably those having a larger mass number than neon ions, specifically at least one selected from argon ions, krypton ions, and xenon ions, because these ions are less chemically reactive with the polymer constituting the polymer film 1. The shape of the tracks 3 formed in the polymer film 1 varies with the type and energy of the ions 2 applied to the polymer film 1. In the case of argon ions, krypton ions, and xenon ions, if their energies are equal to each other, longer tracks 3 are formed in the polymer film 1 when the atomic number of the atom constituting the ions is lower. The change in the shape of the tracks 3 associated with the change in the ionic species and the change in the energy of the ions corresponds to the change in the shape of the pores 4 formed in the step (II). Therefore, the ionic species and its energy can be selected according to the shape of the pores 4 required for the porous polymer film 21.

In the case where the ions 2 are argon ions, their energy is typically 100 to 1000 MeV In the case where a polyethylene terephthalate film with a thickness of about 10 to 200 µm is used as the polymer film 1 to form through holes therein, the energy of the ions 2 is preferably 100 to 600 MeV The energy of ions to be applied to the polymer film 1 can be adjusted according to the ionic species and the polymeric species constituting the polymer film 1. The energy can also be adjusted according to the distance between the pressure barrier sheet 12 and the polymer film 1 and the atmosphere of a region which is located between the sheet 12 and the film 1 and through which the ion beam passes.

The ion source of the ions 2 is not limited. The ions 2 emitted from the ion source are, for example, accelerated in an ion accelerator and then introduced into the beam line 11. The ion accelerator is, for example, a cyclotron, and a more specific example of the ion accelerator is an AVF cyclotron.

The pressure in the beam line 11 is a high vacuum of 10⁻⁵ to 10⁻³ Pa from the viewpoint of suppressing the energy attenuation of the ions 2 in the beam line 11.

The pressure of the atmosphere in which the polymer film 1 is placed is 100 Pa or more. This pressure may be 1 kPa or more, 10 kPa or more, or an atmospheric pressure. The upper limit of the pressure is not particularly limited, but the upper limit is normally an atmospheric pressure unless there is no reason to perform the step (I) in a pressurized atmosphere. When the pressure is an atmospheric pressure, it is particularly easy to replace the polymer film 1. In addition, even if a roll of the polymer film is used, the effect of outgassing is less significant and practically negligible. Furthermore, in the case where the ion-beam-irradiated polymer film 1 is wound on a roll, the polymer film 1 can be fed smoothly when the film 1 is unwound from the roll later.

The configuration of the pressure barrier sheet 12 is not limited as long as the sheet 12 has mechanical strength high enough to withstand the pressure difference between the beam line 11 and the atmosphere in which the polymer film 1 is placed as well as permeability high enough to allow a sufficient amount of the ions 2 to pass the sheet so as to be applied to the polymer film 1, collide with the film 1, and form the pores 4 in the film 1 in the step (II).

The pressure barrier sheet 12 can be a titanium sheet. A titanium sheet has both high mechanical strength and high ion beam permeability, in particular, permeability to an ion beam of rare gas ions, in a well-balanced manner, and it can function adequately as the pressure barrier sheet 12 even when the pressure of the atmosphere in which the polymer film 1 is placed is an atmospheric pressure. A titanium sheet also has high durability as a pressure barrier sheet to be exposed to ion beam irradiation. The thickness of the titanium sheet serving as the pressure barrier sheet 12 is 10 to 50 µm.

The pressure barrier sheet 12 may be an aluminum sheet with a thickness of 13 to 53 µm. The balance between the mechanical strength and the ion beam permeability of an aluminum sheet is worse than that of a titanium sheet (in particular, the mechanical strength of the aluminum sheet is lower). The durability of the aluminum sheet as the pressure barrier sheet to be exposed to ion beam irradiation is also lower. However, the aluminum sheet has higher ion beam permeability than the titanium sheet. If the ion beam permeability is considered more important, the aluminum sheet with a thickness of 13 to 53 µm can be used as the pressure barrier sheet 12.

The pressure barrier sheet 12 is disposed at the end of the beam line 11. The end of the beam line 11 refers to the boundary between the beam line 11 and the atmosphere in which the polymer film 1 is placed. The ions 2 of the ion beam that has passed through the beam line 11 are introduced into the atmosphere across the boundary. In the case where the polymer film 1 is placed in a chamber that is controlled to have this atmosphere, the boundary between the beam line 11 and the chamber corresponds to the end of the beam line 11.

The polymer constituting the polymer film 1 is not particularly limited. Examples of the polymer include polyesters such as polyethylene terephthalate and polyethylene naphthalate, polycarbonates, polyimides, and polyvinylidene fluorides.

The thickness of the polymer film 1 is, for example, 10 to 200 µm.

The polymer film 1 may have a strip shape. In this case, the strip-shaped polymer film wound on a supply roll may be continuously or intermittently fed from the supply roll so as to irradiate the fed polymer film 1 with the ion beam. This method makes it possible to perform the step (I) efficiently. Furthermore, the ion-beam-irradiated polymer film 1 may be wound on a take-up roll so as to obtain a roll of the polymer film that has collided with the ions 2 by the irradiation. This method makes it possible to produce the porous polymer film more efficiently.

In the case where the atmosphere in which the polymer film 1 is placed (the atmosphere in which the polymer film 1 is irradiated with the ion beam) is air and its pressure is an atmospheric pressure, the polymer film need not be placed in an enclosed space (for example, in a chamber) and may be placed in an open space. The same also applies to the supply roll and the take-up roll. Also in this case, the polymer film 1 may be placed in an enclosed space, of course.

In the case where the atmosphere in which the polymer film 1 is placed is not air or the pressure of the atmosphere is lower than the atmospheric pressure, it is preferable to place the polymer film 1 in an enclosed space, for example, in a chamber. The same also applies to the supply roll and the take-up roll. That is, in the production method of the present invention, a roll of the polymer film 1 that has collided with the ions 2 may be obtained in the following manner. The supply roll on which the polymer film 1 having a strip shape is wound and the take-up roll on which the polymer film 1 that has collided with the ions 2 is to be wound are placed in a chamber. In the step (I), in the chamber that is controlled to have the atmosphere mentioned above, the polymer film 1 is fed from the supply roll, the fed polymer film 1 is irradiated with the ion beam, and then the polymer film 1 that has collided with the ions 2 by the irradiation is wound on the take-up roll. Thus, a roll of the polymer film that has collided with the ions 2 is obtained.

The atmosphere in which the polymer film 1 is placed may be air or may be an atmosphere other than air. The atmosphere other than air is, for example, an inert gas atmosphere, and in this case, a secondary chemical reaction induced by the irradiation with the ions is inhibited. This atmosphere may contain helium. Helium is highly effective in stabilizing the irradiation of the polymer film 1 with the ion beam and in inhibiting the secondary chemical reaction. The activation of gaseous molecules contained in the atmosphere can also be inhibited. In addition, the presence of helium having a lower mass than air makes it possible to suppress the attenuation of the energy of the ion beam. Therefore, for example, the distance between the pressure barrier sheet 12 and the polymer film 1 can be increased accordingly.

The effects of helium can be obtained by irradiating the polymer film 1 with the ion beam in a state where helium is present in a region which is located between the pressure barrier sheet 12 and the polymer film 1 and through which the ion beam (ions 2) passes. As a method for creating this helium-containing atmosphere, it is conceivable, for example, to spray helium gas into the region which is located between the pressure barrier sheet 12 and the polymer film 1 and through which the ion beam passes in the step (I). As another method, it is conceivable to irradiate the polymer film 1 with the ion beam in a state where the polymer film 1 is placed in a chamber with a helium-containing atmosphere in the step (I). When the chamber is filled with helium, the above-described effects can be obtained more clearly and reliably. In addition, not only the energy attenuation in the region between the pressure barrier sheet 12 and the polymer film 1 can be reduced but also the energy is attenuated more uniformly and constantly. Therefore, other effects such as less non-uniform ion irradiation can be additionally obtained.

The polymer film 1 is placed at a position, for example, 5 mm to 500 mm away from the pressure barrier sheet 12. Although the specific distance depends on the atmosphere in which the polymer film 1 is placed and its pressure, when the distance between the polymer film 1 and the pressure barrier sheet 12 is too large, the energy of the ion beam that has passed through the pressure barrier sheet 12 is attenuated before reaching the polymer film 1, which may make it difficult to obtain the porous polymer film 21.

The polymer film 1 may be disposed such that the distance from the pressure barrier sheet 12 can vary. The mechanism for this purpose can be provided appropriately by a known means.

In the step (I), the polymer film 1 is irradiated with the ion beam, for example, from a direction perpendicular to the principal surface of the polymer film 1. In the example shown in FIG. 1, the film 1 is irradiated with the ion beam in this manner. In this case, the porous polymer film 21 having the pores 4 extending in the direction perpendicular to the principal surface of the film is obtained in the step (II). In the step (I), the polymer film 1 may be irradiated with the ion beam from a direction oblique to the principal surface of the polymer film 1. In this case, the porous polymer film 21 having the pores 4 extending in the direction oblique to the principal surface of the film is obtained in the step (II). The direction in which the polymer film 1 is irradiated with the ion beam can be controlled by a known means.

In the step (I), the film 1 is irradiated with the ion beam, for example, so that the tracks of the ions 2 are parallel to each other. In the example shown in FIG. 1, the film 1 is irradiated with the ion beam in this manner. In this case, the porous polymer film 21 having the pores 4 extending in parallel to each other is obtained in the step (II). In the step (I), the film 1 may be irradiated with the ion beam so that the tracks of the ions 2 are non-parallel to each other (for example, the directions of the tracks are randomly distributed). The tracks of the ions 2 applied can be controlled by a known means.

In the step (I), the polymer film 1 may be irradiated with the ion beam that has passed through two or more beam lines and two or more pressure barrier sheets 12 disposed at the ends of these beam lines.

Known methods can be applied to obtain other mechanisms needed to perform the step (I) and to control the mechanisms.

Specific embodiments of the step (I) are shown in FIG. 3 to FIG. 6.

In the example shown in FIG. 3, the polymer film 1 is placed in air, and the pressure of this air atmosphere is an atmospheric pressure. The pressure barrier sheet 12 is disposed at the end of the beam line 11. After passing through the beam line 11 and the pressure barrier sheet 12 and then passing through the air between the beam line 11 and the pressure barrier sheet 12, an ion beam 61 (ions 2) collides (collide) with the polymer film 1. The ions 2 that have passed through the polymer film 1 are caught by the stopper 13.

The example shown in FIG. 4 is the same as the example shown in FIG. 3 except that the polymer film 1 is placed in a chamber 14, and the interior of the chamber 14 is in an atmosphere with a pressure of 100 Pa or more. The pressure barrier sheet 12 is disposed at the end of the beam line 11, that is, the joint between the beam line 11 and the chamber 14. After passing through the beam line 11 and the pressure barrier sheet 12, the ion beam 61 (ions 2) is (are) introduced into the atmosphere in the chamber 14 and collides (collide) with the polymer film 1. The ions 2 that have passed through the polymer film 1 are caught by the stopper 13.

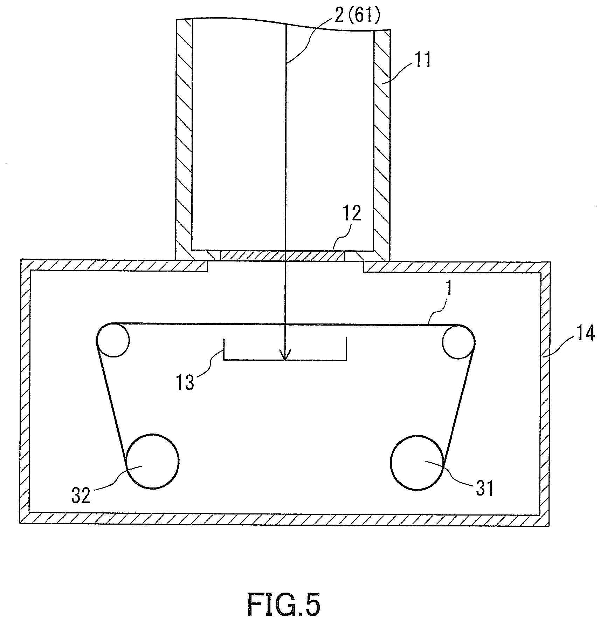

The example shown in FIG. 5 is the same as the example shown in FIG. 4, except that a supply roll 31 on which the polymer film 1 having a strip shape is wound and a take-up roll 32 on which the polymer film 1 that has collided with the ions 2 is to be wound are placed in the chamber 14, and that the polymer film 1 is continuously fed from the supply roll 31, the fed polymer film 1 is irradiated with the ion beam 61, and then the polymer film 1 that has collided with the ions 2 in the ion beam 61 by the irradiation is continuously wound on the take-up roll 32. After passing through the beam line 11 and the pressure barrier sheet 12, the ion beam 61 (ions 2) is (are) introduced into the atmosphere in the chamber 14 and collides (collide) with the polymer film 1. The ions 2 that have passed through the polymer film 1 are caught by the stopper 13. The feeding of the polymer film 1 from the supply roll 31 and the winding of the formed polymer film 1 on the take-up roll 32 may be performed intermittently.

In the case where the ion beam 61 of the ions 2 accelerated in a cyclotron is used, the specific configuration of the cyclotron and the method for accelerating, in the cyclotron, the ions generated from the ion source are not particularly limited. The ion beam of the accelerated ions may be subjected to any processing as long as the effects of the present invention can be obtained.

For example, the ion beam 61 with which the polymer film is irradiated in the step (I) may be an ion beam obtained by folding the tail of an original beam, which is composed of ions accelerated in a cyclotron, inwardly toward the center of the original beam by nonlinear focusing.

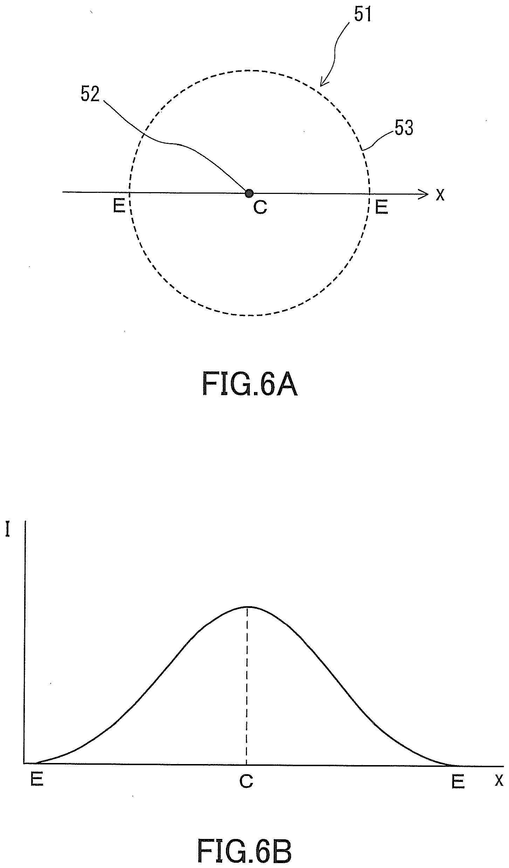

The intensity distribution of an ion beam composed of ions accelerated in a cyclotron (which can also be considered as the probability distribution of the presence of the ion particles in the beam) is not necessarily uniform across the beam. The ion beam usually has a cross-sectional intensity distribution profile (cross-sectional beam profile) in which the intensity continuously decreases from the center of the beam, at which the intensity is maximum, toward the tail of the beam, when the cross section of the beam is taken perpendicular to the direction of the beam (hereinafter, the cross section perpendicular to the direction of the beam simply refers to the "cross section") (see, for example FIG. 6A and FIG. 6B). FIG. 6A shows the cross section of such an ion beam example 51, and the intensity distribution of the ion beam in this cross section is as shown in FIG. 6B, as indicated on the x axis (Point E - Point C - Point E) passing through the beam center 52 on the cross section. In FIG. 6B, the vertical axis indicates the normalized intensity I of the ion beam, which shows that the ion beam 51 has the maximum intensity at the beam center 52 (Point C). Point E at which the intensity is almost zero in FIG. 6B corresponds to the periphery 53 of the ion beam 51 indicated by a dashed line in FIG. 6A. The ion beam 51 shown in FIG. 6A and FIG. 6B is circular in cross section (has a circular periphery 53), and the beam intensity decreases continuously and isotropically from the beam center 52 toward the periphery. The term "isotropically" means that the similar beam intensity distribution (for example, the distribution shown in FIG. 6B) can be obtained on any axis passing through the beam center in the cross section of the ion beam. As shown in FIG. 6B, the ion beam 51 has an intensity distribution based on the normal distribution with the maximum intensity at the beam center 52. That is, the ion beam 51 has a cross-sectional intensity distribution profile of the normal distribution with the maximum intensity at the beam center. Such an ion beam can be obtained, for example, by allowing cyclotron-accelerated ions to pass through a scatterer formed of a metal thin film or the like.

On the other hand, an ion beam obtained by modifying the profile of this ion beam 51 as an original beam (i.e., an ion beam obtained by folding the tail of the ion beam 51) by nonlinear focusing is used to irradiate the polymer film 1. Specifically, an ion beam obtained by folding the tail of the original beam inwardly toward the center of the original beam by nonlinear focusing is used to irradiate the polymer film 1. Here, the original beam is composed of ions accelerated in a cyclotron and has a cross-sectional intensity distribution profile in which the intensity continuously decreases from the center of the original beam, at which the intensity is maximum, toward the tail of the original beam, when the cross section is taken perpendicular to the direction of the original beam. Thus, the polymer film 1 can be irradiated with the ion beam 61 having a more uniform cross-sectional intensity distribution than the original ion beam 51 having the above-mentioned cross-sectional intensity distribution profile. This makes it easy to obtain, in series, porous polymer films having uniformly distributed openings and/or through holes.

Since the irradiation with this ion beam 61 has high affinity for the transverse transfer of the polymer film 1 across the ion beam, a combination of these irradiation and transfer significantly improves the productivity of porous polymer films having highly uniform porosity. Furthermore, since the ion beam 61 is also composed of cyclotron-accelerated ions, like the original beam 51, it is possible to obtain the effects resulting from the fact that the polymer film 1 can be continuously irradiated with highly-accelerated, high-density ions.

The folding of the tail of the original beam by nonlinear focusing can be achieved, for example, by application of nonlinear magnetic fields to the ion beam using multipole electromagnets placed in the path of the ion beam. Specific examples are disclosed in Yosuke Yuri, et al., "Uniformization of the transverse beam profile by means of nonlinear focusing method", Physical Review Special Topics: Accelerators and Beams, vol. 10, 104001 (2007).

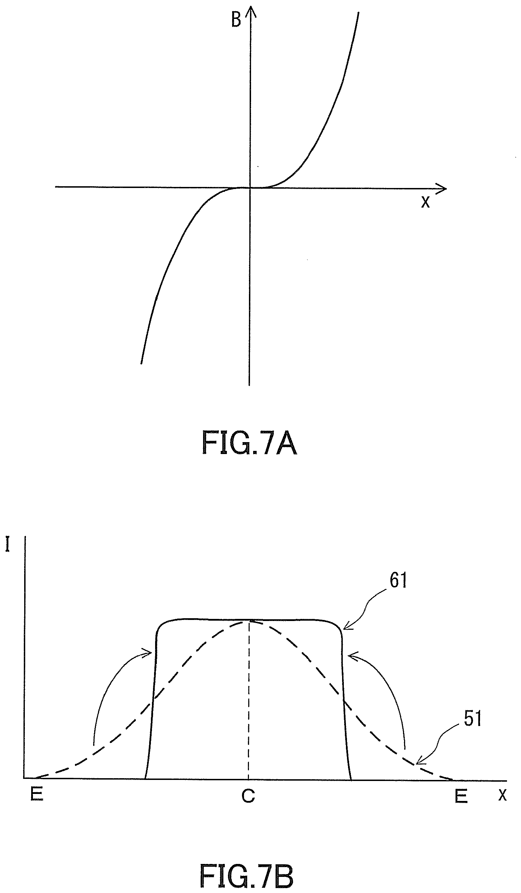

FIG. 7A and FIG. 7B show an example of the folding of the tail of the original beam by nonlinear focusing. Nonlinear focusing is a technique for applying a nonlinearly controlled magnetic field to an ion beam to focus the beam. For example, when a nonlinear magnetic field B shown in FIG. 7A is applied to the ion beam 51 (see FIG. 6B) having a cross-sectional intensity distribution profile of the normal distribution with the maximum intensity at the beam center, the tail of the original beam 51 having an intensity distribution indicated by a dashed line is folded inwardly toward the beam center, as shown in FIG. 7B. Thus, the ion beam 61 having an intensity distribution indicated by a solid line can be obtained. As understood from FIG. 7B, the uniformity of the cross-sectional intensity distribution of the ion beam 61 obtained by this folding is higher than that of the original beam 51.

The intensity distribution profile of the ion beam 61 obtained by the folding by nonlinear focusing is not particularly limited. The profile is, for example, a uniaxial profile taken in the cross section of the beam and has an approximately trapezoidal shape, as shown in FIG. 7B. In order to increase the uniformity of the collision density of the ions in the polymer film 1, it is preferable to perform the folding so that the ion intensity in a region corresponding to the upper side of the trapezoid is as uniform as possible. Since the ion beam 61 is obtained by folding the tail of the original beam 51, the maximum intensity at the beam center 62 often differs little from the maximum intensity at the beam center 52 of the original beam 51, that is, the maximum intensity of the ion beam 61 can be almost equal to that of the original beam 51. This means that not only the maximum intensity of the original beam 51 but also the maximum intensity of the ion beam 61 obtained by the folding can be controlled with high accuracy by controlling the cyclotron.

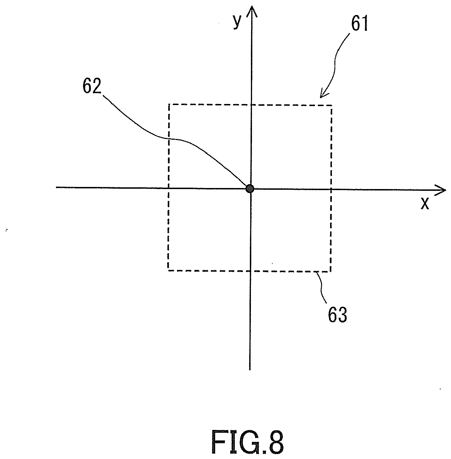

Preferably, the cross-sectional shape of the ion beam 61 obtained by folding by nonlinear focusing is approximately rectangular, as shown in FIG. 8. In this case, efficient and uniform irradiation to the strip-shaped polymer film 1 can be performed. The rectangle may be either a square or a rectangle. However, since the beam cannot necessarily be folded linearly, the resulting cross-sectional shape of the ion beam 61 (the shape of the periphery 63) may be slightly distorted into a "barrel-shape" or a "pincushion-shape" in some cases. The "approximately rectangular shape" includes these distorted cross-sectional shapes. The ion beam 61 having an approximately rectangular cross-sectional shape can be obtained, for example, by setting two axes (an x axis and a y axis) perpendicular to each other in the cross section of the original beam 51 and folding the original beam 51 by nonlinear focusing in these x and y axis directions respectively. The foldings in these axis directions may be performed separately or simultaneously.

A device for performing the step (I) includes, for example, an ion gas source, an ion source device for ionizing a gas, an electromagnet for deflecting a beam of ions, an accelerator (for example, a cyclotron) for accelerating the ions, a beam duct including a beam line of the ions accelerated in the accelerator, a multipole electromagnet for focusing and shaping the ion beam, a vacuum pump for maintaining the path of the ion beam at a predetermined vacuum, a chamber in which a polymer film is to be placed, a mechanism for transferring the polymer film, a device for maintaining the atmosphere in the chamber in a predetermined state, and others.

### [Step (II)]

In the step (II), the polymer film 1 that has collided with the ions 2 in the step (I) is chemically etched so as to form the openings 4b and/or the through holes 4a corresponding to the tracks 3 of the colliding ions 2 left in the polymer film 1 and obtain the porous polymer film 21.

As the etching agent for the chemical etching, for example, acid or alkali can be used. Specifically, the chemical etching can be performed according to a known method.

The pore diameter of the pores 4 having the openings 4b or the pores 4 serving as the through holes 4a varies depending on the ionic species used in the step (I) and its energy. The pore diameter is, for example, 0.01 to 10 µm. These pores normally extend linearly.

The direction in which the pores 4 extend can be a direction perpendicular to the principal surface of the porous polymer film 21.

The density of the pores 4 in the obtained porous polymer film 21 can be controlled by the ionic species used in the step (I), and the energy and the collision density (irradiation density) of that ionic species.

The production method of the present invention may include an optional step, for example, a step of accelerating etching, in addition to the steps (I) and (II) as long as the effects of the present invention can be obtained.

Porous polymer films produced by the production method of the present invention can be used in various applications in which conventional porous polymer films also have been used. The applications are, for example, waterproof air-permeable filters, waterproof sound-transmitting membranes, porous electrode sheets, and article suction sheets.

### EXAMPLES

### (Example 1)

As a polymer film, a non-porous polyethylene terephthalate (PET) film ("ASTROLL FQ0025" manufactured by Kolon Industries, Inc., thickness: 25 µm) was prepared. Next, the prepared PET film was placed at a position to which a beam of argon ions (with an energy of 520 MeV) was applied from a beam line connected to an AVF cyclotron. The pressure in the beam line was maintained at 10⁻⁵ Pa, and the PET film was placed in an air atmosphere with atmospheric pressure. A titanium sheet with a thickness of 30 µm serving as a pressure barrier sheet was disposed at the end of the beam line.

Next, the PET film was irradiated with the argon ion beam from a direction perpendicular to the principal surface of the film. The argon ion irradiation density was 1.0 × 10⁷ ions/cm². When irradiated with the argon ion beam, the PET films were replaced one after another and the distance between the pressure barrier sheet and the PET film was varied between 25 mm and 101.8 mm on each replacement.

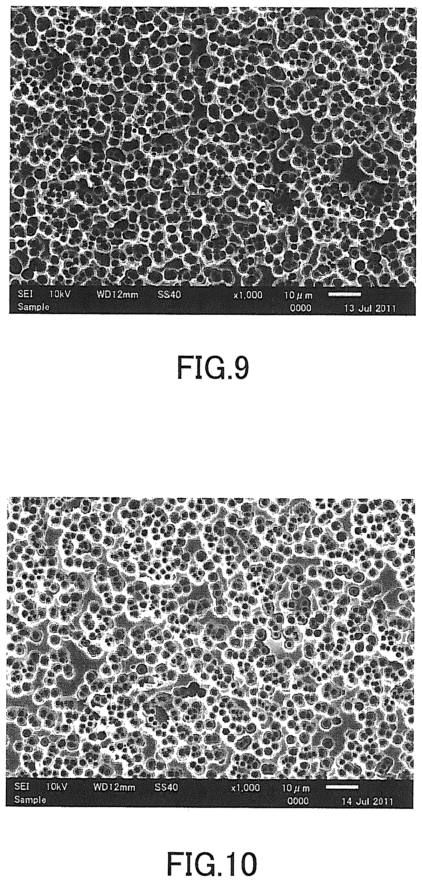

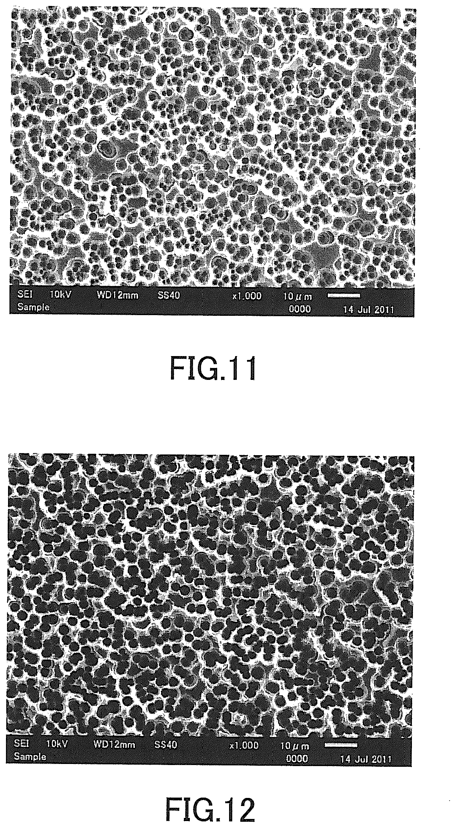

Next, each of the argon ion beam-irradiated PET films was subjected to chemical etching. A 3 mol/L aqueous sodium hydroxide solution (containing solvents including 10 wt.% of ethanol) was used for the chemical etching. The etching temperature was 80°C and the etching time was 15 minutes. After the chemical etching was completed, the PET film was removed from the etching solution, followed by washing with water and drying. Then, the surface of the film was observed with a scanning electron microscope (SEM). FIG. 9 to FIG. 12 show the observation results. FIG. 9 to FIG. 12 show the observation images of the surfaces of porous polymer films obtained when the distance between the pressure barrier sheet and the PET films were 25 mm, 67.8 mm, 91.8 mm, and 101.8 mm, respectively. It was confirmed that pores extending in the direction perpendicular to the surface of the film were formed in each film. In FIG. 9 to FIG. 12, black spots are the pores.

### (Example 2)

As a polymer film, a non-porous polyethylene terephthalate (PET) film ("ASTROLL FQ0025" manufactured by Kolon Industries, Inc., thickness: 25 µm) was prepared. Next, the prepared PET film was placed at a position to which a beam of argon ions (with an energy of 520 MeV) was applied from a beam line connected to an AVF cyclotron. The pressure in the beam line was maintained at 10⁻⁵ Pa, and the PET film was placed in an atmosphere filled with helium gas of atmospheric pressure. A titanium sheet with a thickness of 30 µm serving as a pressure barrier sheet was disposed at the end of the beam line.

Next, the PET film was irradiated with the argon ion beam from a direction perpendicular to the principal surface of the film. The argon ion irradiation density was 1.0 × 10⁷ ions/cm². When irradiated with the argon ion beam, the PET films were replaced one after another and the distance between the pressure barrier sheet and the PET film was fixed at 101.8 mm on each replacement.

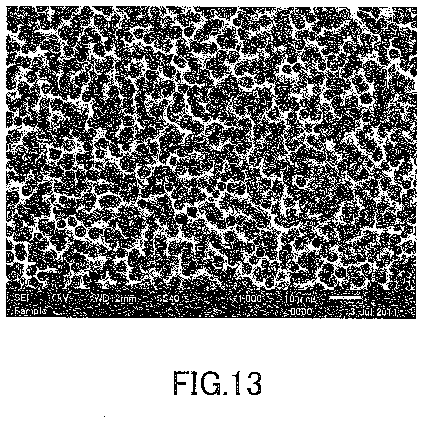

Next, each of the argon ion beam-irradiated PET films was subjected to chemical etching. A 3 mol/L aqueous sodium hydroxide solution (containing solvents including 10 wt.% of ethanol) was used for the chemical etching. The etching temperature was 80°C and the etching time was 15 minutes. After the chemical etching was completed, the PET film was removed from the etching solution, followed by washing with water and drying. Then, the surface of the film was observed with a scanning electron microscope (SEM). FIG. 13 shows the observation result. It was confirmed that pores extending in the direction perpendicular to the surface of the film were formed, as shown in FIG. 13. In FIG. 13, black spots are the pores.

### INDUSTRIAL APPLICABILITY

Porous polymer films produced by the production method of the present invention can be used in various applications in which conventional porous polymer films also have been used, for example, in waterproof air-permeable filters, waterproof sound-transmitting membranes, porous electrode sheets, article suction sheets, etc.

## Claims

1. A method for producing a porous polymer film (21), comprising the steps of:
(I) irradiating a polymer film (1) with an ion beam (61) of accelerated ions so as to form a polymer film (21) that has collided with the ions (2) in the beam; and
(II) chemically etching the formed polymer film (21) so as to form openings and/or through holes corresponding to tracks of the colliding ions left in the polymer film (1), wherein
in the step (I), the polymer film (1) is placed in an atmosphere with a pressure of 100 Pa or more, and
the polymer film (1) placed in the atmosphere is irradiated with the ion beam (61) that has passed through a beam line (11) maintained at a lower pressure than the pressure of the atmosphere and through a pressure barrier sheet (12) disposed at an end of the beam line (11) to separate the beam line (11) from the atmosphere,
wherein the pressure in the beam line (11) is 10⁻⁵ to 10⁻³ Pa,
wherein the pressure barrier sheet (12) is a titanium sheet having a thickness of 10 to 50 µm
or an aluminum sheet having a thickness of 13 to 53 µm.

2. The method for producing a porous polymer film (21) according to claim 1, wherein the pressure of the atmosphere is an atmospheric pressure.

3. The method for producing a porous polymer film (21) according to claim 1, wherein the ions (2) have a larger mass number than neon ions.

4. The method for producing a porous polymer film (21) according to claim 1, wherein the atmosphere contains helium.

5. The method for producing a porous polymer film (21) according to claim 1, wherein in the step (I), the polymer film (1) is irradiated with the ion beam (61) in a state where helium is present in a region which is located between the pressure barrier sheet (12) and the polymer film (1) and through which the ion beam (61) passes.

6. The method for producing a porous polymer film (21) according to claim 1, wherein in the step (I), the polymer film (1) is irradiated with the ion beam (61) in a state where the polymer film (1) is placed in a chamber (14) with a helium-containing atmosphere.

7. The method for producing a porous polymer film (21) according to claim 1, wherein
a supply roll (31) on which the polymer film (1) having a strip shape is wound and a take-up roll (32) on which the formed polymer film (1) that has collided with the ions (2) is to be wound are placed in a chamber (14), and
in the step (I), in the chamber (14) that is controlled to have the atmosphere with the pressure of 100 Pa or more, the polymer film (1) is fed from the supply roll (31), the fed polymer film (1) is irradiated with the ion beam (61), and then the formed polymer film (1) that has collided with the ions (2) by the irradiation is wound on the take-up roll (32), so as to obtain a roll of the formed polymer film (1) that has collided with the ions (2).

8. The method for producing a porous polymer film (21) according to claim 1, wherein the ion beam (61) with which the porous polymer film (21) is irradiated in the step (I) is obtained by folding a tail of an original beam inwardly toward a center of the original beam by nonlinear focusing, the original beam being composed of ions accelerated in a cyclotron and having a cross-sectional intensity distribution profile in which the intensity continuously decreases from the center of the original beam, at which the intensity is maximum, toward the tail of the original beam, and the profile being an intensity distribution profile in a cross section perpendicular to a direction of the original beam.

## Patentansprüche

1. Verfahren zur Herstellung eines porösen Polymerfilms (21), das die folgenden Schritte umfasst:
(I) Bestrahlen eines Polymerfilms (1) mit einem Ionenstrahl (61) von beschleunigten Ionen, um einen Polymerfilm (21) zu bilden, der mit den Ionen (2) in dem Strahl kollidiert ist; und
(II) chemisches Ätzen des gebildeten Polymerfilms (21), um Öffnungen und/oder Durchgangslöcher zu bilden, die Spuren der kollidierenden Ionen entsprechen, die in dem Polymerfilm (1) hinterlassen wurden, wobei
im Schritt (I) der Polymerfilm (1) in einer Atmosphäre mit einem Druck von 100 Pa oder höher platziert wird, und
der in der Atmosphäre platzierte Polymerfilm (1) mit dem Iodenstrahl (61) bestrahlt wird, der eine Strahllinie (11), die bei einem niedrigeren Druck als dem Druck der Atmosphäre gelassen wird, und eine Drucksperrfolie (12) durchquert hat, die an einem Ende der Strahllinie (11) angeordnet ist, um die Strahllinie (11) von der Atmosphäre zu trennen,
wobei der Druck in der Strahllinie (11) 10⁻⁵ bis 10⁻³ Pa beträgt,
wobei die Drucksperrfolie (12) eine Titanfolie, die eine Dicke von 10 bis 50 µm aufweist,
oder eine Aluminiumfolie ist, die eine Dicke von 13 bis 53 µm aufweist.

2. Verfahren zur Herstellung eines porösen Polymerfils (21) nach Anspruch 1, wobei der Druck der Atmosphäre ein atmosphärischer Druck ist.

3. Verfahren zur Herstellung eines porösen Polymerfilms (21) nach Anspruch 1, wobei die Ionen (2) eine höhere Massenzahl aufweisen als Neonionen.

4. Verfahren zur Herstellung eines porösen Polymerfilms (21) nach Anspruch 1, wobei die Atmosphäre Helium enthält.

5. Verfahren zur Herstellung eines porösen Polymerfilms (21) nach Anspruch 1, wobei im Schritt (I) der Polymerfilm (1) mit dem Ionenstrahl (61) in einem Zustand bestrahlt wird, in dem Helium in einer Region vorhanden ist, die sich zwischen der Drucksperrschicht (12) und dem Polymerfilm (1) befindet und die der Ionenstrahl (61) durchquert.

6. Verfahren zur Herstellung eines porösen Polymerfilms (21) nach Anspruch 1, wobei im Schritt (I) der Polymerfilm (1) mit dem Ionenstrahl (61) in einem Zustand bestrahlt wird, in dem der Polymerfilm (1) in einer Kammer (14) mit einer heliumhaltigen Atmosphäre platziert wird.

7. Verfahren zur Herstellung eines porösen Polymerfilms (21) nach Anspruch 1, wobei
eine Zuführrolle (31), auf welche der Polymerfilm (1), der eine Streifenform aufweist, gewickelt ist, und eine Aufnahmerolle (32), auf welcher der gebildete Polymerfilm (1), der mit den Ionen (2) kollidiert ist, zu wickeln ist, in einer Kammer (14) platziert werden, und
im Schritt (I) in der Kammer (14), die kontrolliert wird, um die Atmosphäre mit dem Druck von 100 Pa oder höher aufzuweisen, der Polymerfilm (1) von der Zuführrolle (31) zugeführt wird, der zugeführte Polymerfilm (1) mit dem Ionenstrahl (61) bestrahlt wird und dann der gebildete Polymerfilm (1), der mit den Ionen (2) durch die Bestrahlung kollidiert ist, auf die Aufnahmerolle (32) gewickelt wird, um eine Rolle des gebildeten Polymerfilms (1) zu erhalten, der mit den Ionen (2) kollidiert ist.

8. Verfahren zur Herstellung eines porösen Polymerfilms (21) nach Anspruch 1, wobei der Ionenstrahl (61), mit dem der poröse Polymerfilm (21) im Schritt (I) bestrahlt wird, durch Falten eines Endes eines ursprünglichen Strahls nach innen hin zu einer Mitte des ursprünglichen Strahls durch nichtlineares Fokussieren erhalten wird, wobei der ursprüngliche Strahl aus Ionen besteht, die in einem Zyklotron beschleunigt werden, und ein Querschnittsstärkenverteilungsprofil aufweist, in dem die Stärke kontinuierlich von der Mitte des ursprünglichen Strahls, an der die Stärke maximal ist, hin zum Ende des ursprünglichen Strahls abnimmt und das Profil ein Stärkenverteilungsprofil in einem Querschnitt senkrecht zu einer Richtung des ursprünglichen Strahls ist.

## Revendications

1. Procédé pour la production d'un film polymère poreux (21), comprenant les étapes de :
(I) irradiation d'un film polymère (1) avec un faisceau d'ions (61) d'ions accélérés afin de former un film polymère (21) qui est entré en collision avec les ions (2) dans le faisceau ; et
(II) gravure chimique du film polymère formé (21) afin de former des ouvertures et/ou perforations correspondant aux parcours des ions entrant en collision laissés dans le film polymère (1), dans lequel
dans l'étape (I), le film polymère (1) est placé dans une atmosphère avec une pression de 100 Pa ou supérieure, et
le film polymère (1) placé dans l'atmosphère est irradié avec le faisceau d'ions (61) qui est passé à travers une ligne de faisceau (11) maintenue à une pression inférieure à la pression de l'atmosphère et à travers une feuille barrière de pression (12) disposée à une extrémité de la ligne de faisceau (11) pour séparer la ligne de faisceau (11) de l'atmosphère,
dans lequel la pression dans la ligne de faisceau (11) est de 10⁻⁵ à 10⁻³ Pa,
dans lequel la feuille barrière de pression (12) est une feuille en titane ayant une épaisseur de 10 à 50 µm
ou une feuille en aluminium ayant une épaisseur de 13 à 53 µm.

2. Procédé pour la production d'un film polymère poreux (21) selon la revendication 1, dans lequel la pression de l'atmosphère est une pression atmosphérique.

3. Procédé pour la production d'un film polymère poreux (21) selon la revendication 1, dans lequel les ions (2) présentent un nombre de masse supérieur aux ions néon.

4. Procédé pour la production d'un film polymère poreux (21) selon la revendication 1, dans lequel l'atmosphère contient de l'hélium.

5. Procédé pour la production d'un film polymère poreux (21) selon la revendication 1, dans lequel dans l'étape (I), le film polymère (1) est irradié avec le faisceau d'ions (61) dans un état où de l'hélium est présent dans une région qui est disposée entre la feuille barrière de pression (12) et le film polymère (1) et à travers laquelle le faisceau d'ions (61) passe.

6. Procédé pour la production d'un film polymère poreux (21) selon la revendication 1, dans lequel dans l'étape (I), le film polymère (1) est irradié avec le faisceau d'ions (61) dans un état où le film polymère (1) est placé dans une chambre (14) avec une atmosphère contenant de l'hélium.

7. Procédé pour la production d'un film polymère poreux (21) selon la revendication 1, dans lequel
un rouleau d'alimentation (31) sur lequel le film polymère (1) présentant une forme de bande est enroulé et un rouleau enrouleur (32) sur lequel le film polymère formé (1) qui est entré en collision avec les ions (2) doit être enroulé sont placés dans une chambre (14), et
dans l'étape (I), dans la chambre (14) qui est contrôlée pour présenter l'atmosphère avec la pression de 100 Pa ou supérieure, le film polymère (1) est introduit à partir du rouleau d'alimentation (31), le film polymère introduit (1) est irradié avec le faisceau d'ions (61), et le film polymère formé (1) qui est entré en collision avec les ions (2) par l'irradiation est ensuite enroulé sur le rouleau enrouleur (32), afin d'obtenir un rouleau du film polymère formé (1) qui est entré en collision avec les ions (2).

8. Procédé pour la production d'u film polymère poreux (21) selon la revendication 1, dans lequel le faisceau d'ions (61) avec lequel le film polymère poreux (21) est irradié dans l'étape (I) est obtenu en pliant une queue d'un faisceau d'origine vers l'intérieur vers un centre du faisceau d'origine par un recentrage non linéaire, le faisceau d'origine étant constitué d'ions accélérés dans un cyclotron et ayant un profil de distribution d'intensité transversale dans lequel l'intensité diminue en continu à partir du centre du faisceau d'origine, auquel l'intensité est maximale, vers la queue du faisceau d'origine, et le profil étant un profil de distribution d'intensité dans une section transversale perpendiculaire à une direction du faisceau d'origine.
